(19) **Europäisches Patentamt / European Patent Office / Office européen des brevets**

(11) **EP 1 007 921 B1**

(12) **EUROPÄISCHE PATENTSCHRIFT**

(45) Veröffentlichungstag und Bekanntmachung des Hinweises auf die Patenterteilung:
**15.08.2012 Patentblatt 2012/33**

(21) Anmeldenummer: **98937403.8**

(22) Anmeldetag: **22.06.1998**

(51) Int Cl.:
**G01K 3/04** (2006.01)    **G01K 7/42** (2006.01)

(86) Internationale Anmeldenummer:
**PCT/DE1998/001704**

(87) Internationale Veröffentlichungsnummer:
**WO 1998/059226 (30.12.1998 Gazette 1998/52)**

(54) **SIGNALISIERUNG DES KOCHZUSTANDES VON STÜCKIGEM KOCHGUT**

SIGNALING THE COOKING STATE OF FOOD COOKED IN PIECES

SIGNALISATION DE L'ETAT DE CUISSON D'UNE SUBSTANCE A CUIRE EN MORCEAUX

(84) Benannte Vertragsstaaten:
**AT BE CH DE DK FR GB IT LI NL SE**

(30) Priorität: **22.06.1997 DE 19726416**

(43) Veröffentlichungstag der Anmeldung:
**14.06.2000 Patentblatt 2000/24**

(73) Patentinhaber: **Gabriel, Rupprecht**
**33813 Oerlinghausen (DE)**

(72) Erfinder: **Gabriel, Rupprecht**
**33813 Oerlinghausen (DE)**

(74) Vertreter: **Leonhard, Frank Reimund et al**
**Leonhard - Olgemöller - Fricke**
**Patentanwälte**
**Postfach 10 09 62**
**80083 München (DE)**

(56) Entgegenhaltungen:
**EP-A- 0 441 432    DE-A- 19 528 980**
**DE-C- 3 342 939**

- **PATENT ABSTRACTS OF JAPAN vol. 009, no. 072 (P-345), 2. April 1985 -& JP 59 203931 A (KAWASAKI SEITETSU KK), 19. November 1984**
- **PATENT ABSTRACTS OF JAPAN vol. 010, no. 135 (P-457), 20. Mai 1986 -& JP 60 257332 A (MITSUBISHI DENKI KK), 19. Dezember 1985**
- **PATENT ABSTRACTS OF JAPAN vol. 009, no. 161 (P-370), 5. Juli 1985 -& JP 60 036924 A (FUJI DENKI SEIZO KK), 26. Februar 1985**

**Beschreibung**

Die Erfindung betrifft eine Vorrichtung, die den Kochzustand von Gütern wie Eiern, Kartoffeln, Reis und ähnliches nachbilden kann und eine exakte Kontrolle und Signalisierung des zu erreichenden Kochzustandes ermöglicht. Üblicherweise werden für das Kochen von z. B. Eiern Eieruhren oder andere Zeitgeber eingesetzt. Der Nachteil dieser Methode sind die geringe Exaktheit und auch der Nachteil, daß die Zeituhr erst bei Erreichen der Kochtemperatur des Wassers mit anschließendem Einlegen der Eier gestartet werden kann, also mehrere Aktionen des "Eierkochs" erfordern. Dies überfordert viele Anwender, insbesondere wenn sie gerade müde aus dem Bett gefallen sind.

Aus diversen Schriften, z.B. EP 145 953 A2, US-A 4,085,493 **und** EP-A 441 432 sind Kochhilfen bekannt, die mit mechanischen thermischen Modellen arbeiten. Hierbei werden die thermischen Modelle durch geeignete Materialien, die die thermische Differentialgleichung der inneren Erwärmung des Eies nachbilden, simuliert. Ein thermischer Sensor, der einen Tongeber startet bzw. die Temperatur anzeigt (Thermometer), wird dann zur Anzeige des Kochzustandes genutzt. Auch ist das bekannte Starten eines Zeitgebers oberhalb einer bestimmten Temperatur nicht genau, da in dem Fall erst gewartet werden muß, bis das Wasser kocht und dann erst das Ei und die Kochhilfe eingelegt werden dürfen, da der Einfluß des Aufheizens des Wassers auf den Kochzustand nicht richtig nachgebildet wird. Die hier beschriebene Erfindung umgeht die prinzipbedingten Nachteile der bekannten Einrichtungen.

Die Erfindung soll ein für den Anwender besonders einfaches und den Kochzustand besonders genau nachbildendes Aggregat schaffen, welches auch mit kaltem Wasser gestartet werden kann. Mehrfach aufeinander folgende Kochgrad-Überwachungen sollen ohne lange Zwischenwartezeiten möglich sein.

Diese Aufgabe löst Anspruch 1 oder Anspruch 18.

Bei der Erfindung wird das thermische Modell nicht durch Materialauswahl auf mechanischem Weg, sondern durch ein digitales Rechenwerk als Differentialgleichung (oder genauer Differenzengleichung) aufgebaut. Eingang des Rechenmodells ist die möglichst unverzögert gemessene Temperatur des Kochmediums - meist Wasser. Durch einen elektronischen Fühler, der z.B. in dem integrierten Schaltkreis als Bandgap Temperatursensor oder durch externe elektrische Temperaturfühler, z.B. PT 100 Fühler, Eisen/Konstantan-Temperatursensor, PTC etc., gebildet werden kann, wird dieser Meßwert zur Verfügung gestellt.

Die Differentialgleichung wird durch ein digital arbeitendes Modell gebildet, da für die langen Zeitkonstanten analoge Schaltungen (RC Filter) wegen mannigfaltiger Nachteile ungünstig sind. Die geringen Ströme und die erhebliche Umgebungstemperatur zusammen mit der Feuchtigkeit des kochenden Wassers teilweise sogar mit Salz, lassen alle elektronischen Schaltungen analoger Art ungenau werden oder versagen. Mit einem Rechenwerk digitalen Charakters lassen sich die Nachteile vermeiden. Die Genauigkeit wird ausschließlich durch die Genauigkeit des Sensors, des A/D-Wandlers und durch die Zeitreferenz des Rechenwerkes bestimmt. Derartige Anordnungen können mit hoher Präzision hergestellt werden.

Die thermische Differentialgleichung des Kochgutes wird in dem Rechenwerk diskret gerechnet. Für den einfachsten Fall, der schon gut mit der Realität übereinstimmt, reicht es aus, den Temperaturverlauf im Kochgut durch einen Tiefpaß erster Ordnung als "Verzögerung mit thermischer Zeitkonstante" darzustellen:

$$\vartheta_i(t) + T1\, d\vartheta_i(t)\, /\, dt = \vartheta_a(t)$$

mit

$\vartheta_i(t)$ = innere Temperatur der Vorrichtung
$T1$ = Zeitkonstante der Erwärmung des Kochguts
$\vartheta_a(t)$ = Wassertemperatur.

Die Differentialgleichung wird in dem diskret arbeitenden Rechenwerk durch eine Differenzengleichung nachgebildet. Die Zeitkonstante T1 des Kochguts wird durch Messung mit einem Thermometer, welches in ein ausgewähltes Kochgut (z.B. Ei) eingebracht wird oder durch die Messung des Kochzustandes bei konstanter Wassertemperatur in bestimmten Zeitabschnitten experimentell ermittelt und in die Differentialgleichung eingefügt. Das letztere Verfahren eignet sich insbesondere bei anderen Kochgütern, die sich einer Temperaturmessung entziehen und eine sensorische Prüfung (Probieren des Kochguts) erforderlich machen (z.B. Reis, Nudeln, Kartoffeln). Hier wird die Messung für verschiedenen Wassertemperaturen wiederholt um auch den Grad der Differentialgleichung zu bestimmen. Insbesondere wenn beim Kochen Quellvorgänge für den zu erreichenden Kochzustand wichtig sind (z.B. bei Reis oder Nudeln), kann die Differentialgleichung erster Ordnung eventuell nicht ausreichende Ergebnisse liefern, so daß eine Gleichung zweiten Grades gute Ergebnisse liefert. Die erste Zeitkonstante T1, die größer ist, bildet den Kochzustand nach, die zweite (kleinere) Zeitkonstante T2 bildet den Quellvorgang nach. Auch eine Totzeit T3 kann die zweite (kleinere) Zeitkonstante ersetzen.

Ein weiteres Problem, welches bei bekannten "mechanischen" thermischen Modellen auftritt, ist die lange Zeitspanne des Rücksetzens. Ein mit mechanischen Mitteln gebildetes thermisches Modell kann nicht zurückgesetzt werden. In dem vorliegenden elektronischen Modell wird erfindungsgemäß die thermische Zeitverzögerung beim Abkühlen verkleinert (Anspruch 2, Anspruch 16, Anspruch 17). Dies ermöglicht es, schon sehr kurz nach dem Entnehmen der Kochhilfe einen neuen Kochvorgang zu beginnen. Bei einer mechanischen Lösung ist dies nicht möglich, da typisch für den Abkühlvorgang die gleiche Zeitdauer abzuwarten ist wie für den Kochvorgang selbst. Dies ist ein erheblicher Nachteil, wenn der Eierkoch nach Verspeisen des ersten Eies feststellt, daß er noch ein Ei essen möchte. Jetzt zu warten macht das Frühstück zur Strafe.

Der Kochvorgang mit der erfindungsgemäßen Anordnung ist denkbar einfach und auch ohne Lesen einer Bedienungsanleitung durchführbar. Man nehme das Kochgut und lege es zusammen mit der Kochhilfe in das Wasser. Wenn die Melodie oder ein Signalton erklingt, ist der gewünschte Zustand erreicht. Das Kochgut und die Kochhilfe werden dem Wasser entnommen. Es kann wieder von vorne losgehen. Es ist dabei irrelevant, ob das Wasser kocht oder zu Beginn des Kochvorganges noch kalt ist, was eine wesentliche Vereinfachung für die Benutzung darstellt. Durch die Kochhilfe wird es ohne große intellektuelle Anstrengungen möglich auch den kochtechnisch noch so unbedarften Menschen zu einem wahren Meister z.B. des Eierkochens zu machen.

Die als Kochhilfe zu verwendende Vorrichtung kann auch für andere Produkte als Eier eingesetzt werden. Die Zeitkonstante des digitalen thermischen Modells wird dann im Programm entsprechend angepaßt.

Zudem kann der zu erzielende Zustand des Kochgrades des Kochgutes, z.B. des Eies durch geeignete Gestaltung des Gehäuses taktil "be" greifbar gemacht werden. Ein weiches Ei erhält eine weiche Kunststoff- oder Silikonschale. Der Benutzer erfühlt dabei direkt den Zustand den das Ei haben soll. Fehlbenutzungen können so wirksam auch bei Analphabeten unterbunden werden. Das harte Ei erhält in Analogie dazu eine harte Schale. Das Rechenwerk ist dazu an den gewünschten (durch die Gestaltung des Mantels festgelegten) Kochzustand angepasst und gibt die dazu passenden Signale ab.

Neben der direkten Signalisierung nur eines Kochzustandes kann auch ein Signalgenerator integriert sein, der bei verschiedenen Kochzuständen verschieden Signale erzeugt. Dies kann beispielsweise ein Piepton bei weich, zwei Pieptöne bei Mittel und drei Pieptöne bei hart sein. Hierbei wird die erste Zeit durch das digitale thermische Modell, die weiteren Zeiten durch einen internen Zeitgeber bestimmt, der die weiteren Signaltöne startet. So lassen sich beispielsweise mit einer Vorrichtung beim Kochen verschiedene Kochzustände mit nur einer Vorrichtung signalisieren.

Außerdem kann von der Kochhilfe ein Signal abgegeben werden, welches signalisiert, daß der Kochvorgang ab jetzt mit reduzierter Energiezufuhr zum gewünschten Ergebnis führt. Dieses Signal wird für Eier beim Erreichen einer Wassertemperatur von ca. 95°C (90°C bis 100°C) abgegeben. Die thermische Masse des Wassers ist dann in der Lage, den Kochvorgang ohne Energiezufuhr und damit kostensparend zu Ende zu führen. Bei anderen Kochgütern mit längerer Kochzeit können zwei Signale ertönen. Das erste bei Erreichen einer Wassertemperatur von ca. 95°C , das zweite ca. 5 Minuten vor dem zu erwartenden Kochvorgangsende. Durch das erste Signal wird signalisiert, daß die Energiezufuhr reduziert werden kann, durch das zweite Signal wird signalisiert, daß der Vorgang ohne Energiezufuhr zu Ende geführt werden kann.

Andere Kochgüter lassen sich durch entsprechende Anpassung der Parameter des thermischen digitalen Modells programmieren. Die Gehäuse werden so gewählt, daß sie eindeutig dem zu kochenden stückigen Kochgut zugeordnet sind. Dies ist z.B. die Form einer Kartoffel für die Kochhilfe für Kartoffeln, die Form eines Chinesen für die Kochhilfe für Reis, die Kochhilfe für Paprika erhält die Form einer Paprikaschote und die Kochhilfe für Milch wird in einer schwimmenden Plastikkuh eingebaut. Im letzteren Fall ist das "stückige Kochgut" die Vorrichtung selbst.

**Beispiele** sollen die Erfindung erläutern und ergänzen.

Fig. 1      zeigt einen Aufbau eines als Ei ausgestalteten Beispiels der Vorrichtung. Ein Sensor 6a und die gesamte Signalelektronik sind dabei in einem Chip 6 als Schaltkreis integriert und auf einer Platine 5 angeordnet.

Fig. 2      zeigt einen Signalverlauf des Beispiels der Vorrichtung.

Fig. 3      zeigt einen ersten inneren Aufbau des Beispiels der Vorrichtung, wie er im Chip 6 in programmierter und/oder schaltungstechnischer Weise vorgesehen sein kann.

Fig. 4      ist ein alternativer Aufbau im Chip 6.

Fig. 5      ist ein Signalverlauf von mehreren zu signalisierenden Kochzuständen "soft", "medium" und "hard" eines als Ei ausgestalteten Beispiels der Vorrichtung.

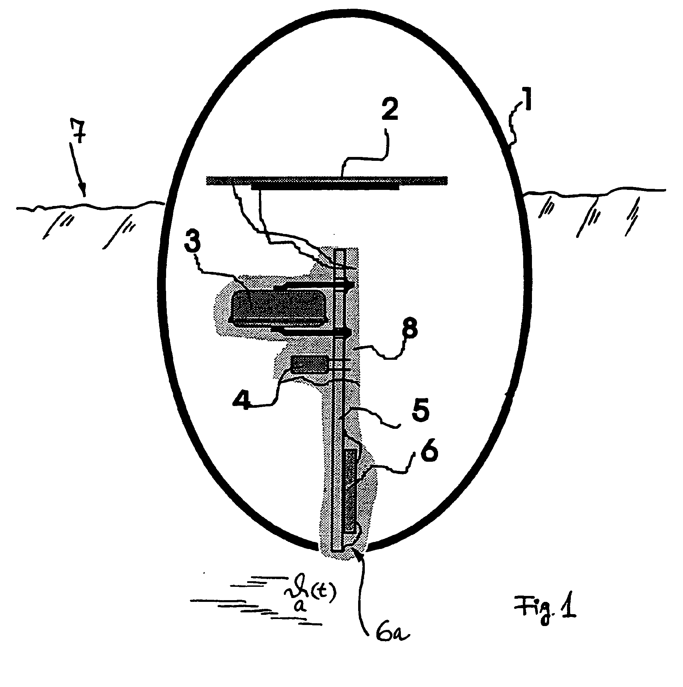

Die Kochhilfe von **Figur 1** ist durch eine wenigstens teilweise aus dem Wasserspiegel 7 herausragende Hülle 1 umschlossen, jedoch so, daß der Sensor 6a unter dem Wasserspiegel angebracht ist, um einen guten thermischen Kontakt zum umgebenden Wasser zu gewährleisten. Ein Signalgeber 2 ist sinnvollerweise ein Piezo-Lautsprecher mit rostfreier Membrane. Die elektronische Schaltung (Chip 6) ist auf der Platine 5 aufgebracht. Der Chip 6 enthält neben dem Sensor 6a für die Wassertemperatur auch ein Rechenwerk für den thermischen Vorgang und einen Melodiegenerator für den Signalgeber 2. Ein Quarz 4 liefert die Basiszeit der Rechenschaltung. Auch andere Zeitgeneratoren sind einsetzbar, Quarze sind jedoch besonders genau bei relativ niedrigem Preis.

Die Schaltung 6 wird aus einer Batterie 3 mit Energie versorgt. Die Leistungsaufnahme der Schaltung wird so gewählt, daß ein Betrieb über mehrere Jahre möglich ist. Die gesamte Schaltung ist mit einem wasserabweisenden, lebensmittelverträglichen Schutzmantel 8 im hellgrauen Bereich in Fig. 1 umhüllt. Diese Umhüllung kann durch eine Tauchumhüllung oder einen Verguß erreicht werden. Der Sensor 6a der Vorrichtung, der hier in dem Chip 6 mit integriert ist, steht in guter thermischer Anbindung zum Wasser. Der Signalgeber 2 ist oberhalb des Wasserstandes angebracht.

Das wenigstens teilweise schwimmende Gehäuse 1 ist so ausgebildet, daß eine formstabile oder gewichtsstabile Schwimmlage erreicht wird, um sicherzustellen, daß der Sensor 6a im Chip 6 immer einen guten thermischen Kontakt zum Wasser hat. Neben der hier dargestellten Ausführungsform der Vorrichtung ist auch eine Trennung des Sensors 6a von der Signalelektronik 6 möglich. Dadurch ließe sich gegebenenfalls auf die Umhüllung 8 verzichten. Die dargestellte Form zeichnet sich jedoch insbesondere durch eine besonders preiswert herzustellende Elektronik aus.

Das zuvor beschriebene, im Ausführungsbeispiel als Ei 1 dargestellte Objekt wird zusammen mit einem anderen stückigen Kochgut, wie im Beispiel ebenfalls einem oder mehreren Eiern in ein Kochmedium 7 eingelegt und Energie zugeführt. Das als Kochhilfe dienende Ei mit der inneren Schaltung 6 signalisiert nach der für den Kochvorgang geeigneten Zeit mit einem Signalton über den Signalgeber 2 den ersten Kochzustand der anderen Eier. Andere Signalisierungen können folgen, so dann, wenn der erste Kochzustand das Erreichen des Kochzustandes "weiches Ei" der anderen stückigen Kochgüter signalisiert. Die Stufen können - gerade bei Eiern sehr anschaulich - so dargestellt werden, daß ein zunächst weiches Ei nach dem ersten Signalton zu einem höheren Kochgrad, also einem härteren Ei, nach Ertönen des zweiten Signaltons bis hin zu einem harten, einen noch höheren Kochgrad aufweisenden gekochten Ei wird, wenn der dritte Signalton ertönt.

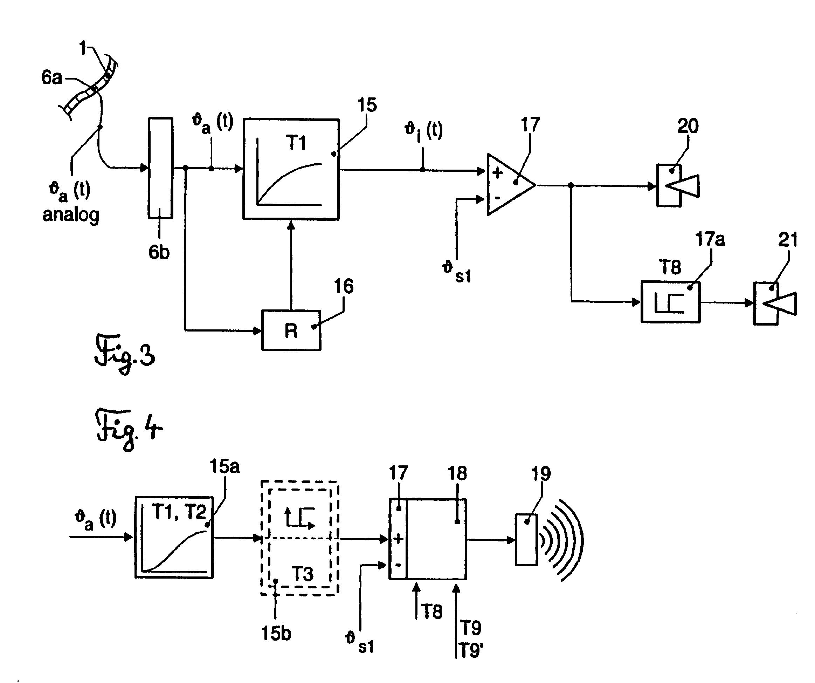

Im folgenden soll anhand des Blockschaltbildes der Figuren 3 und 4 und zuvor anhand der Verläufe der einzelnen Systemgrößen erläutert werden, wie die Schaltung 6 in dem Ei 1, das den anderen stückigen Kochgütern beim Kochvorgang mit beigegeben wird, arbeitet und reagiert. Der anhand des Eies beschriebene Funktionsablauf ist gleichermaßen auch auf den Kochvorgang der anderen stückigen Kochgüter übertragbar.

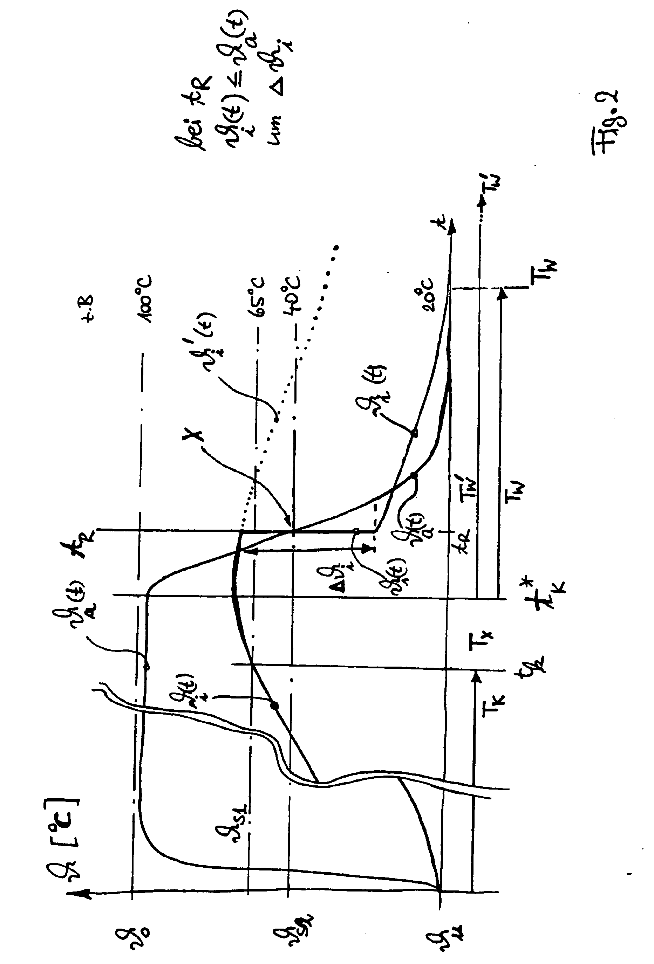

In Figur 2 beginnt der Kochvorgang damit, daß die Außentemperatur $\partial_a(t)$ schnell und stark ansteigt, wenn man annimmt, daß die Temperatur des Kochmediums, hier als Wasser angenommen, etwa 100°C beträgt. Diese Siedetemperatur $\partial_0$ wird von der Außenfläche, also dem Mantel 1 des in Figur 1 dargestellten Elektronik-Eies schnell erreicht, ausgehend von der Umgebungstemperatur $\partial_u$ die im allgemeinen zu 20°C angenommen werden kann, wenn man nordeuropäische Verhältnisse anlegt.

In Figur 3 ist dargestellt, daß die Temperatur $\partial_a(t)$ als Temperaturverlauf von der Hülle 1 des Eies mittels Temperatursensor 6a erfaßt wird, einem AD-Wandler 6b zugeführt wird, der mit der Außentemperatur $\partial_a(t)$ - jetzt in diskretisierter Form - eine diskret aufgebaute Verzögerungsstufe 15 steuert. Ihre Ausgangsgröße ist

der innere Temperaturverlauf $\partial_i(t)$, der quasistetig, ebenso wie die Anregungsfunktion $\partial_a(t)$, nur verzögert, ansteigt. $\partial_i(t)$ wird einem Komparator 17 zugeführt, von dem ein Vergleich mit einem Schwellenwert $\partial_{S1}$ durchgeführt wird. Dieser erste Schwellenwert veranschaulicht den Koagulationspunkt von Eiern, bzw. bei anderem stückigen Kochgut, die entsprechende Schwelle, bei der man ein Ende des Kochvorgangs annimmt. Eiweißhaltige Kochgüter haben diesen Schwellenwert etwa bei 60°C bis 65°C, Nudeln als Hartweizengries-Produkte haben diesen Schwellenwert etwa bei 80°C bis 85°C, bei Kartoffeln nimmt man diesen Schwellenwert zu etwa 90°C an, während Reis mit einem ersten Schwellenwert von etwa 80°C gut gesteuert gekocht werden kann.

Die Ausgangsgröße des Komparators 17 führt auf einen Signalgeber 20, der entweder direkt ein Lautsprecher oder eine Piezo ist. Wird ein zusätzliches Laufzeitglied 17a eingeführt, kann eine Laufzeit T8 gestartet werden, nachdem der erste Schwellenwert überschritten wurde. Diese Laufzeit kann zur Signalisierung des nächsten oder übernächsten Kochzustandes - wie zuvor erläutert - dienen. Die Signalisierung dieses nächsten oder übernächsten Kochzustandes kann mit einem gesonderten Lautsprecher 21, bevorzugt aber mit demselben Lautsprecher 20 signalisiert werden, wie in der **Figur 4** in einer Alternative als Ausführungsbeispiel dargestellt ist. Hier ist nicht nur eine Nachbildung des Kochvorganges dargestellt, vielmehr ist auch ein Quellvorgang dargestellt, der mit einer zweiten Zeitkonstante T2 simuliert wird. Dieser kombinierte Koch- und Quellvorgang wird später erläutert, bei dem auch noch zusätzlich oder anstelle der den Quellvorgang darstellenden Zeitkonstante T2 ein Laufzeitglied 15b mit einer Zeitkonstante T3 vorgesehen sein kann. In jedem Fall wird das Ausgangssignal des Verzögerungsgliedes 15a oder des Laufzeitgliedes 15b über den Komparator 17 einer Signalschaltung 18 zugeführt, die ein oder zwei Laufzeiten T8 und T9 realisiert und je nach zeitlicher Situation das Piezo 19 entsprechend ansteuert, orientiert an dem Ausgangssignal des Komparators 17. Wird dieses Ausgangssignal aktiviert (hat es eine Flanke), wird ein erster Signalton mit dem Piezo 19 erzeugt, der in einer ersten Melodie oder in einem ersten Signalton von der Ansteuerung 18 ausgeführt wird. Gleichzeitig wird eine erste Laufzeit T8 gestartet und nach Ablauf dieser Laufzeit T8 wird ein zweiter Signalton, der sich von dem ersten unterscheidet, über den Piezo 19 signalisiert. Gleichzeitig wird eine weitere Laufzeit T9 gestartet, nach deren Ablauf der Piezo 19 einen weiteren Signalton abgibt, der dem vorherigen Signalton entsprechen kann, aber wiederum unterschiedlich gegenüber dem allerersten Signalton ist. Es müssen dabei nicht beide Laufzeiten T8, T9 implementiert sein. Die Laufzeiten betragen typischerweise eine Minute, beginnend von der Flanke des Komparators 17.

Die zuvor angesprochene Verzögerung T1 oder T1, T2 oder T1, T2, T3 gemäß den Figuren 3 und 4 zur Darstellung entweder nur eines Kochvorganges oder eines Koch- und Quellvorganges gemeinsam, werden angepaßt an das Kochgut. Ein Ei ist mit einer PT1-Verzögerung 15 gut nachgebildet, die eine Zeitkonstante von etwa fünf Minuten besitzt. Für das Kochen von Nudeln, Kartoffeln oder Reis muß ein Quellvorgang mit berücksichtigt werden. Hier ist als erste Zeitkonstante für den Kochvorgang ein Wert von vier bis sechs Minuten geeignet, während als Zeitkonstante für den Quellvorgang ein Wert von zwei bis drei Minuten passend ist. Wird eine Totzeit T3 verwendet, z.B. anstelle der zweiten (kleineren) Verzögerungszeit T2, kann auch die größere Verzögerungszeit T1 angepaßt werden. Eine Totzeit von etwa 1,5 bis 3 min zusammen mit einer ersten Verzögerung T1 von vier bis fünf Minuten ist angepaßt für den kombinierten Koch- und Quellvorgang.

Wie an Figur 3 nachvollzogen werden kann, hat der Meßwert der Außentemperatur $\partial_a(t)$ über den Sensor 6a praktisch verzögerungslos über den AD-Wandler 6b Eingang zu dem Verzögerungsglied 15, was zu einem an seinem Ausgang langsam ansteigenden inneren Temperaturwert $\partial_i(t)$ gemäß **Figur 2** führt. Diese Zeitkonstante ist gemäß der obigen Darlegung sehr viel größer, als die schnelle Aufwärmung des Mantels 1, so daß in Figur 2 hier eine zeitliche Schnittlinie vorgenommen wurde und ein wesentlicher zeitlicher Verlauf, in dem sich nichts Neues ergibt, nicht dargestellt worden ist. Erst der Zeitpunkt, zu dem die innere Temperatur $\partial_i(t)$ in die Nähe der ersten Schwelle $\partial_{S1}$ gelangt, ist wieder in der Figur 2 dargestellt. Zum Zeitpunkt $t_k$ durchquert sie die erste Schwelle, hier wird der Signalton gemäß Figur 4 oder Figur 3 ausgelöst. Es wird hier angenommen, daß der Benutzer der Vorrichtung nicht sofort, sondern erst nach einer Verzögerungzeit $T_x$ reagiert und deshalb die innere Temperatur - das Ausgangssignal der Verzögerung 15 - weiter ansteigt, aber nur geringfügig, bis der Benutzer das stückige Kochgut und auch die mit dem Kochgut in das Kochmedium eingelegte Kochhilfe mit dem Mantel 1 zu dem Zeitpunkt $t_K{}^*$ aus dem Wasser nimmt, so daß die Außentemperatur $\partial_a(t)$ sehr schnell und sehr steil abfällt, während die Innentemperatur praktisch noch keine Veränderung zeigt.

Durchquert die Außentemperatur einen zweiten Schwellenwert $\partial_{S2}$, der in Figur 2 unterhalb des ersten Schwellenwertes eingezeichnet ist, so wird die Zustandsgröße der thermischen Verzögerung 15 erheblich beeinflußt, hier durch einen Sprung um dem Wert $\Delta\partial_i$ welcher Sprung die Zustandsgröße der Verzögerung 15 unter den momentanen Temperaturwert des Mantels führt. Dieser Sprung führt eine praktische Parallelversetzung des langsamen thermischen Signals $\partial_i(t)$ durch, so daß es nach Parallelversetzungen in relativ kurzer Wartezeit bis auf die Umgebungstemperatur $\partial_u$ abfallen kann, ohne zu große Verzögerungen zu bewirken, die erhalten worden wären, wenn man die hypothetische Weiterführung des inneren Temperatursignals $\partial_i{}'(t)$ - gepunktet dargestellt in Figur 2 - betrachtet. Ohne die impulsartige Rücksetzung im zeitlichen Bereich X, also zum Zeitpunkt $t_R$, wenn das äußere Temperatursignal den zweiten Schwellenwert $\partial_{S2}$ unterschreitet, hätte man eine sehr große Wartezeit $T_w{}'$, bevor die Kochhilfe erneut für einen Kochvorgang einsetzbar wäre. Der Sprung in der Zustandsgröße im Zeitbereich X sorgt dafür, daß die Kochhilfe wieder sehr schnell einsatzbereit ist, also die Außentemperatur des Mantels wieder praktisch denselben Wert einnimmt, wie auch die innere Temperatur $\partial_i(t)$, die das thermisch verzögerte Signal über das Funktionsglied 15 ist.

In Figur 2 ist dieser Unterschied der Wartezeit dargestellt durch den Vergleich der beiden Wartezeiten $T_w$ und $T_{w'}$, jeweils beginnend von dem Zeitpunkt des Entnehmens der Kochhilfe aus dem heißen Kochmedium, bis zu einer praktisch vollständigen Angleichung der Innen- und Außentemperatur an die Umgebungstemperatur $\partial_u$.

In der Figur 2 sind beispielhaft Temperaturwerte eingezeichnet, die für das Kochen von Eiern mit Wasser repräsentativ sind. Die Siedetemperatur 100°C stellt die maximale Temperatur dar. Die Koagulationstemperatur ist der erste Schwellenwert $\partial_{S1}$ von 65°C, während der Schwellenwert zur Erfüllung der Rücksetzung, der zweite Schwellenwert $\partial_{S2}$ mit 40°C angenommen ist, was deutlich oberhalb der Umgebungstemperatur von hier angenommenen 20°C liegt, aber geringfügig unterhalb der Koagulationstemperatur.

Für andere Kochgüter sind diese Werte entsprechend anzupassen, auch für andere geographische Bereiche, in denen die Umgebungstemperatur normalerweise höher ist als 20°C, ebenso wie für andere Kochmedien, die z.B. nicht 100°C als Kochtemperatur erreichen.

Eingestellt werden diese Werte jeweils in dem Chip 6 in dem Mantel 1, das somit nicht nur die Verzögerung 15 oder 15a realisiert, sondern auch die Rücksetzungslogik mit dem Schaltkreis R, der von der unverzögerten Außentemperatur des Mantels 1, gemessen über den Sensor 6a so gesteuert wird, daß er bei einem mit einem negativen Gradienten versehenen Abfallen das Rücksetzen der Zustandsgröße - als Ausgangsgröße der Funktionsglieder 15 oder 15a gemäß Figur 2 - zum Zeitpunkt $t_R$ bewirkt und nach diesem impulsartigen Eingreifen funktionslos ist, bevor der Rücksetzkreis R mit dem Bezugszeichen 16 nicht erneut aktiviert wird. Das erneute Aktivieren erfolgt dann, wenn die Eingangstemperatur $\partial_a(t)$ des Funktionsgliedes 15, die die Meßtemperatur an der Außenfläche des Mantels 1 darstellt, den ersten oder zweiten Schwellenwert der Figur 2 überschreitet. Dann ist die Rücksetzschaltung R wieder so aktiviert, daß sie zum Zeitpunkt $t_R$ einen negativen Gradienten dieses Meßwertverlaufs und ihr Unterschreiten unter einen Schwellenwert erfassen kann. -

Das erreichte Ziel ist somit eine möglichst genaue Nachbildung des Kochzustandes, das Signalisieren des Zeitpunktes des ersten Kochzustandes - entsprechend dem Beginn des Koagulationszustandes des Eises - und die möglichst schnelle Rückführung der Elektronik auf einen Zustand, der die Überwachung eines weiteren Kochvorganges realitätsnah ermöglicht.

Der zuvor eingezeichnete Sprung um $\Delta\partial_i$ kann größer oder kleiner gewählt werden. Wird er größer gewählt, ist die Zeitspanne des Wartens $T_w$ sehr viel kleiner. Es kann ein Rücksetzen auch direkt auf die Außentemperatur $\partial_a(t)$ erfolgen, so daß die innere Temperatur möglichst eng an die Außentemperatur angelehnt ist, wenn die Rücksetzung erfolgt. Ein am besten geeigneter Anfangszustand der Kochhilfe ist derjenige, bei dem die Innentemperatur und die Außentemperatur, also die Eingangsgröße und die Ausgangsgröße des Funktionsgliedes 15 praktisch gleich sind oder zumindest im wesentlichen gleich groß sind, so daß eine entsprechende Eingangsgröße richtig den Kochzustand der parallel in das Kochmedium eingelegten stückigen Kochgüter in der Kochhilfe ermittelt. Ein zu starkes Auseinanderklaffen dieser beiden Werte beim Beginn des Kochens führt dazu, daß die Kochhilfe nicht den sich entwickelnden Kochzustandes in den parallel in das Kochmedium eingelegten stückigen Kochgütern nachbildet und deshalb die Signalisierung unzuverlässig ist.

Das digitale Rechenmodell erlaubt die Nachbildung sowohl des Anwärmungsvorganges, wie auch die schnelle Rückführung beim Entnehmen aus dem Kochmedium und die Reduktion der Wartezeit $T_w$ auf ein Minimum. Die Darstellung des Kochzustandes in digitalem Modell kann ebenso die Möglichkeit bieten, die unterschiedlichsten Kochgüter bei der Entwicklung ihres Kochzustandes nachzubilden und fertigungstechnisch kann ein einzelnes Chip so ausgebildet sein, daß es bereits inhärent mehrere stückige Kochgüter nachzubilden in der Lage ist und das Setzen der entsprechenden Bonddrähte oder der anderweitig vorzunehmenden Programmierungen bei der Erstellung der jeweils spezifischen Ausgestaltung der Kochhilfen führt dazu, daß die Festlegung erfolgt, welches stückige Kochgut mit der Kochhilfe überwacht werden soll.

Dementsprechend kann auch die äußere Gestaltung in optischer oder taktiler Weise gewählt werden. Ein Ei kann weich, hart oder mittelweich als Ausbildung der Kochhilfe gestaltet sein, was die Gestaltung des Mantels 1 betrifft. Die optische äußere Form kann entsprechend dem Kochgut gewählt werden, so eine Kartoffel für Kartoffeln als stückige Kochgüter, eine Paprika für Paprika, die Darstellung eines China repräsentierenden Objektes für Reis oder die Darstellung eines Italien repräsentierenden Objektes für Nudeln, was nur Beispiele der Vielzahl der möglichen Gestaltungen sind.

Das digitale Rechenmodell erlaubt es auch, weitere Signale abzugeben. So kann ein Signal bereitgestellt werden, das die Abschaltung schon vor Erreichen der maximalen Außentemperatur im Sinne der Siedetemperatur von 100°C für den Benutzer akustisch repräsentiert. Bei Ertönen dieses Signals wird dem Benutzer mitgeteilt, daß die Energiezufuhr entweder ganz abgeschaltet oder nur reduziert werden soll. In diesem thermischen Zustand ist genügend Energie in dem warmen oder kochenden Wasser enthalten, um das stückige Kochgut weiter dem ersten Kochzustand zuzuführen.

Ebenso kann ca. fünf Minuten vor dem Erreichen des gewünschten Kochzustandes bei Erreichen einer früheren Schaltschwelle ein Signal abgegeben werden, welches den Zeitpunkt der möglichen Abschaltung der Energiezufuhr signalisiert, also nicht nur eine Reduktion der Energiezufuhr signalisiert, sondern die gänzliche Abschaltung. Der genannte Wert betrifft im wesentlichen Eier, kann aber für die anderen stückigen Kochgüter entsprechend angepaßt werden und beruht auf Erfahrungswerten. Auch hier ist die in dem Kochmedium enthaltene Energie noch groß genug, um den ersten Kochzustand zuverlässig erreichen zu können, auch wenn keine Energie weiter zugeführt wird.

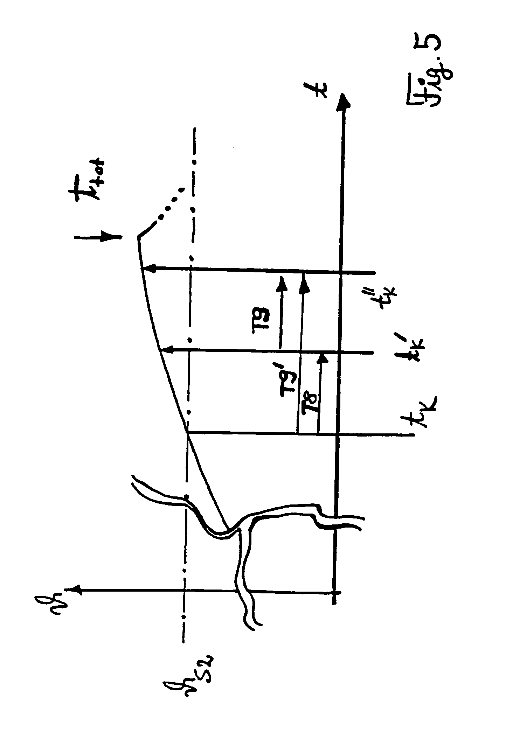

Die Darstellung der eingangs erwähnten mehreren Kochzustände, die sich sequentiell aneinanderreihen, ergibt sich aus **Figur 5**, die einen zeitlichen Ausschnitt sowohl in vertikaler als auch in horizontaler Richtung aus dem Diagramm der Figur 2 repräsentiert.

Der Zeitpunkt des Erreichens des ersten Kochzustandes ist $t_k$. Ab hier würde theoretisch angenommen werden, daß der Benutzer seine Kochgüter aus dem Kochmedium herausnimmt. Nimmt der Benutzer diesen Zeitpunkt nicht wahr, möchte er also z.B. kein weichgekochtes Ei mit dem Kochgrad "soft", so wartet er wahrscheinlich auf ein härter gekochtes Ei, das ihm nach Ablauf der Zeitspanne T8 in dem Signalgenerator 18 durch Signalisierung zum Zeitpunkt $t_k'$ mitgeteilt wird. Entnimmt er das Kochgut dann noch immer nicht dem Kochmedium 7, so möchte er wahrscheinlich auch kein Ei mit dem Kochgrad "medium", er wartet sicher auf den noch weiter erhöhten Kochgrad "hard", der zum Zeitpunkt $t_k''$ eintritt, nachdem die Laufzeit T9 abgelaufen ist. Nachdem die Laufzeiten T8 und/oder T9 abgelaufen sind, wird jeweils ein individueller Signalton von dem Piezo 19 der Figur 4 abgegeben, wobei die innere Temperatur $\partial_i(t)$ als Ausgangsgröße der thermischen Verzögerung 15 oder 15a weiter steigt, bis zur Entnahmezeit, der sogenannten "Take-Out-Time" ($t_{tot}$ in Figur 5 und entsprechend $t_k^*$ in Figur 2).

Die Zeiten T8 und T9 können sich entweder sequentiell aneinanderreihen oder können als Zeiten T8 und T9' gemeinsam gestartet werden, nachdem der Komparator 17 das Erreichen des ersten Kochzustandes zum Zeitpunkt $t_k$ in Figur 2 signalisiert hat.

Zur Festlegung der ersten Temperaturschwelle $\partial_{S1}$ waren zuvor Ausführungen gemacht. Sie liegt eng an der Konsistenz und Art des stückigen Kochgutes, das zusammen mit der Kochhilfe in das Kochmedium eingelegt wird. Die Festlegung der Höhe des zweiten Schwellenwertes $\partial_{S2}$ liegt zwischen dem ersten Schwellenwert und der normalen Umgebungstemperatur an den Orten, an denen die Kochhilfe eingesetzt wird. Unterstellt, diese normale Umgebungstemperatur als diejenige Außentemperatur, die außerhalb des Kochmediums 7 normalerweise angetroffen wird, liegt bei 20°C und der erste Schwellenwert $\partial_{S1}$ liegt bei 65°C, dann empfiehlt sich die Wahl des zweiten Schwellenwertes geringfügig unterhalb des ersten Schwellenwertes zu wählen, um möglichst schnell ein Eingreifen des unsymmetrischen Rücksetzens im Abkühlungstadium im Bereich X von Figur 2 zu erhalten und einen deutlichen Sprung der Rücksetz-Reichweite $\Delta\partial_i$ zu ermöglichen und ein möglichst weites Parallelverschieben des verzögerten Verlaufs der - Zustandsgröße des Funktionsgliedes 15 zu ermöglichen. Ein zu geringer Wert des Absenkens und ein zu spätes Beginnen dieses Absenkens führen zu einer zu großen Wartezeit und eine zu starke Absenkung des ersten Schwellenwertes in Richtung auf die "normale Umgebungstemperatur $\partial_u$" erhöht die Gefahr, daß bei durchaus anzutreffenden erhöhten Umgebungstemperaturen die Kochhilfe nicht richtig funktioniert, wenn diese normale Umgebungstemperatur bereits oberhalb des zweiten Schwellenwertes liegt. Danach bemißt der Fachmann unter der hier gegebenen Dimensionierungsrichtlinie die genaue Festlegung der zweiten Schwelle $\partial_{S2}$.

Die impulsartige Herabsetzung entweder der Zeitkonstanten in den Funktionsgliedern 15, 15a und/ oder der Zustandsgrößen $\partial_i(t)$ oder anderer Verzögerungswerte bei Verzögerungsgliedem zweiten oder dritten Grades ermöglicht den nur einmaligen Einfluß und dann die möglichst realitätsnahe Einstellung der Kochhilfe für die weiteren Systemzustände. Würde zu lange ein Rücksetzsignal aktiv sein, könnte während einer längeren Zeitspanne keine realitätsnahe Nachführung eines möglicherweise schon wieder beginnenden Kochvorganges erfolgen. Daher ist es günstig, die impulsartige Rücksetzung zu wählen und die erneute Aktivierung des Rücksetzkreises R erst dann vorzunehmen, wenn das unverzögerte und möglichst trägheitsfreie gemessene Temperatursignal $\partial_a(t)$ einen hohen Schwellenwert überschreitet und eine positive Steigung hat, welcher höhere Schwellenwert in jedem Fall oberhalb aller normalerweise anzutreffenden Umgebungstemperaturen $\partial_u$ in dem jeweiligen räumlichen Gebiet des Einsatzes der Kochhilfe liegen sollte.

Es kann nicht immer davon ausgegangen werden, daß die Temperatur des Kochmediums erheblich oberhalb des ersten Schwellenwertes $\partial_{S1}$ liegt, vielmehr können z.B. Eier auch dann gekocht werden, wenn die Temperatur des Kochmediums nur wenig oder einigermaßen oberhalb des Koagulationspunktes von 65°C liegt, also z.B. 70°C oder 80°C für das Kochmedium beträgt. Dann werden die Schaltvorgänge von den vorgeschlagenen Schwellenwerten noch immer zuverlässig gesteuert, weil der zweite Schwellenwert unterhalb der Temperatur für das Erreichen des Koagulationspunktes des Eies liegt. Würde man immer von Kochtemperaturen von annähernd 100°C ausgehen, würde eine Schaltung auch dann funktionieren, wenn der zweite Schwellenwert oberhalb des ersten Schwellenwertes zu liegen kommt, aber davon kann - wie oben erläutert - für ein zuverlässig funktionierendes Aggregat nicht immer ausgegangen werden.

Die weiter gegebenen Schwellen, die dritte Schwelle und die vierte Schwelle, die mit dem früheren Abschalten der Energiezufuhr oder der Signalisierung eines möglichen Herabsetzens der Energiezufuhr zusammenhängen, können anhand ähnlicher Überlegungen festgelegt werden.

## Patentansprüche

1.  Vorrichtung zur Signalisierung zumindest eines ersten Kochzustandes zumindest eines stückigen Kochgutes in einem flüssigen Kochmedium (7), wie Wasser, mit einem wenigstens teilweise schwimmfähigen Mantel (1), einem Temperatursensor (6a), einem Analog-Digitalwandler (6b), einem digitalen Rechenwerk (6) und einem Signalgeber (2,20,21,19), bei welcher Vorrichtung

    (a) eine Einrichtung (17,18) vorgesehen ist, um bei Erreichen einer festgelegten ersten Temperaturschwelle ($\partial_{S1}$) den Signalgeber (2,20,21,19) einzuschalten, womit der erste Kochzustand des Kochgutes signalisiert wird; **dadurch gekennzeichnet, dass**
    (b) eine den Sensor (6a) enthaltende Elektronikbaugruppe wasserdicht umhüllt ist und zusammen mit dem Signalgeber (2) in den Mantel (1) so eingebaut ist, dass das Kochmedium direkt an die Baugruppe gelangt, um die Temperatur ($\partial_a(t)$) des Mantels ohne wesentliche thermische Verzögerung mit dem Sensor (6a) zu erfassen;
    (c) in dem digitalen Rechenwerk (6) der - durch den, mit der guten thermischen Leitfähigkeit zum Kochmedium (7) versehenen Sensor (6a) messbare und mit dem Wandler (6b) digitalisierbare - Temperaturwert ($\partial_a(t)$) des flüssigen Kochmediums (7) mit zumindest einer thermischen Zeitkonstante (T1,T2,T3) verzögerbar ist (15,15a,15b), um einen thermisch verzögerten inneren Temperaturwert ($\partial_1(t)$) zu bilden.

2.  Vorrichtung nach Anspruch 1, bei der die thermische Zeitkonstante (T1,T2,T3) beim Abkühlen gegenüber der eingestellten thermischen Zeitkonstante im wesentlichen sprungartig verringert wird, so daß das Abkühlverhalten gegenüber dem Aufwärmverhalten der Vorrichtung unsymmetrisch ist.

3.  Vorrichtung nach Anspruch 1, bei der der Kochvorgang des Kochgutes durch eine Differenzengleichung in dem digitalen Rechenwerk (6) nachgebildet wird, wobei die Eingangsgröße der Differenzengleichung der im wesentlichen trägheitsfrei gemessene Temperaturwert ($\partial_a(t)$) des Kochmediums (7) und die Ausgangsgröße der mit der zumindest einen thermischen Zeitkonstanten (T1,T2,T3) verzögerte innere Temperaturwert ($\partial_1(t)$) ist.

4.  Vorrichtung nach Anspruch 1, bei der der Sensor (6a) als Bandgap-Temperatursensor in einem integrierten Schaltkreis, der den AD-Wandler und das digitale Rechenwerk und eine Steuerelektronik (18) für den Signalgeber (2;20,21,19) enthält, integriert ist.

5. Vorrichtung nach Anspruch 1, bei der das digitale Rechenwerk (6) in einem schwimmfähigen Mantel (1) als Gehäuse untergebracht ist und der Signalgeber im oberen Bereich des Gehäuses angeordnet ist.

6. Vorrichtung nach Anspruch 1, bei welcher der Mantel (1) einen taktilen Bezug zu dem gewünschten Kochzustand des stückigen Kochgutes hat und das Rechenwerk (6) auf das Signalisieren des Erreichens dieses Kochzustandes angepaßt ist.

7. Vorrichtung nach Anspruch 1, bei der das Gehäuse einen optischen Bezug zu dem Kochgut hat; insbesondere eine Eiform für Eier als Kochgut oder eine Kartoffelform für Kartoffeln oder eine Tortellini für Nudeln.

8. Vorrichtung nach Anspruch 1, bei der beim Erreichen einer festgelegten dritten Temperaturschwelle durch den äußeren Temperaturwert ($\partial_a$(t)) kurz unterhalb der Siedetemperatur des Kochmediums ein Signal abgebbar ist, welches den Zeitpunkt der möglichen Abschaltung der Energiezufuhr anders signalisiert, als der erste Kochzustand signalisiert wird.

9. Vorrichtung nach Anspruch 1 oder 8, bei der vor dem Erreichen des ersten Kochzustandes und bei Erreichen einer vierten Schaltschwelle durch den inneren Temperaturwert ($\partial_1$(t)) ein Signal gegeben wird, welches den Zeitpunkt der möglichen Herabsetzung der Energiezufuhr anders signalisiert, als der erste Kochzustand signalisiert wird.

10. Vorrichtung nach Anspruch 1, bei der beim Erreichen der ersten Temperaturschwelle ($\partial_{S1}$) durch den inneren Temperaturwert ein Zeitgeber (17a,18) gestartet wird, der weitere Signalisierungen veranlaßt, um einen weiteren, höheren Kochzustand anders zu signalisieren als den ersten Kochzustand des Kochgutes.

11. Vorrichtung nach Anspruch 1, wobei das Kochgut Ei, Kartoffel, Paprika, Reis oder Nudel ist.

12. Vorrichtung nach Anspruch 1, bei der die Verzögerung mit zwei Zeitkonstanten (T1,T2) erfolgt, von den eine kleiner als die andere ist, um einen schnelleren Quellvorgang des Kochgutes und einen langsameren Kochvorgang gemeinsam bei der Bildung des verzögerten Temperaturwertes ($\partial_i$(t)) zu berücksichtigen.

13. Vorrichtung nach Anspruch 2, bei der die Verringerung der Verzögerung durch impulsartiges Herabsetzen der zumindest einen Zeitkonstante (T1,T2) auf eine wesentlich kleinere Zeitkonstante erfolgt, um danach wieder die vorher vorgesehene zumindest eine Zeitkonstante einzustellen.

14. Vorrichtung nach Anspruch 2 oder Anspruch 13, bei der die Verringerung der thermischen Zeitkonstante eine impulsartige Herabsetzung ($\Delta\partial_i$) des inneren Temperaturwertes ($\partial_i$(t)) ist, welche Herabsetzung erfolgt, wenn der von dem Sensor (6a) gemessene Temperaturwert ($\partial_a$(t)) unter eine vorgegebene zweite Temperaturschwelle ($\partial_{S2}$) sinkt.

15. Vorrichtung nach Anspruch 14, bei der die zweite Temperaturschwelle erheblich oberhalb der normalerweise außerhalb des Kochmediums angetroffenen Außentemperatur und unter der ersten Temperaturschwelle liegt.

16. Vorrichtung nach Anspruch 1 oder Anspruch 12, bei der eine Totzeit (T3) auch die Verzögerung mitbestimmt.

17. Vorrichtung nach Anspruch 1, bei der eine Rücksetzeinrichtung (R,16) vorgesehen ist, die auf den thermisch verzögerten inneren Temperaturwert ($\partial_i$(t)) dann impulsartig stark herabsetzend Einfluß nimmt, wenn

   (a) der gemessene Temperaturwert ($\partial_a$(t)) des Sensors (6a) sinkt,
   (b) der sinkende Temperaturwert einen vorgegebenen zweiten Schwellenwert unterschreitet, der unterhalb der ersten Temperaturschwelle liegt,

   wobei die Rücksetzeinrichtung (16) nach dem impulsartigen Einfluß erst dann wieder für einen weiteren impulsartigen Einfluß aktiviert wird, wenn der erste Schwellenwert oder der zweite Schwellenwert ($\partial_{S1}, \partial_{S2}$) von dem gemessenen Temperaturwert ($\partial_a$(t)) überschritten wird.

18. Verfahren zur Signalisierung zumindest ersten eines Kochzustandes zumindest eines stückigen Kochgutes in einem flüssigen Kochmedium (7), mit einer Vorrichtung nach Anspruch 1 wobei

   (a) eine Einrichtung (17) bei Erreichen einer festgelegten ersten Temperaturschwelle ($\partial_{S1}$) den Signalgeber (2,20,21,19) einschaltet, womit ein erster Kochzustand des Kochgutes signalisiert wird;
   (b) eine Rücksetzeinrichtung (R,16) auf einen thermisch verzögerten inneren Temperaturwert dann impulsartig stark herabsetzend Einfluß nimmt, wenn

i) ein von dem Sensor (6a) gemessener Temperaturwert ($\partial_a$(t)) sinkt,
ii) der sinkende Temperaturwert einen vorgegebenen zweiten Schwellenwert unterschreitet, der unterhalb der ersten Temperaturschwelle liegt.

19. Verfahren nach Anspruch 18, wobei die Rücksetzeinrichtung (R,16) nach dem impulsartigen Einfluß erst dann wieder für einen weiteren impulsartigen Einfluß aktiviert wird, wenn der erste Schwellenwert oder der zweite Schwellenwert ($\partial_{S1}$, $\partial_{S2}$) von dem gemessenen Temperaturwert ($\partial_a$(t)) überschritten wird.

**Claims**

1. Device for signalling at least one first cooking state of at least one lump of cooking material in a liquid cooking medium (7), such as water, with an at least partly buoyant casing (1), a temperature sensor (6a), an analog-digital converter (6b), a digital computing unit (6) and a signal transmitter (2, 20, 21, 19), in which device

(a) a device (17, 18) is provided in order to switch on the signal transmitter (2, 20, 21, 19) on reaching a fixed first temperature threshold ($\partial_{S1}$), with which the first cooking state of the cooking material is signalled;
**characterised in that**
(b) an electronic assembly containing the sensor (6a) is enclosed in water-tight manner and together with the signal transmitter (2) is incorporated into the casing (1) so that the cooking medium reaches the assembly directly in order to record the temperature ($\partial_a$(t)) of the casing using the sensor (6a) without considerable thermal delay;
(c) in the digital computing unit (6), the temperature value ($\partial_a$(t)) of the liquid cooking medium (7) - which can be measured by the sensor (6a) provided with good thermal conductivity to the cooking medium (7) and can be digitalised using the converter (6b) - can be delayed (15, 15a, 15b) with at least one thermal time constant (T1, T2, T3) in order to form a thermally delayed inner temperature value ($\partial_i$(t)).

2. Device according to claim 1, in which the thermal time constant (T1, T2, T3) is reduced essentially stepwise during cooling with respect to the set thermal time constant so that the cooling behaviour is unsymmetrical with respect to the heating behaviour of the device.

3. Device according to claim 1, in which the cooking process of the cooking material is simulated by a difference equation in the digital computing unit (6), wherein the input parameter of the difference equation is the temperature value ($\partial_a$(t)) of the cooking medium (7) measured in essentially inertia-free manner and the output parameter is the inner temperature value ($\partial_i$(t)) delayed by the at least one thermal time constant (T1, T2, T3).

4. Device according to claim 1, in which the sensor (6a) is integrated as a band-gap temperature sensor in an integrated circuit, which contains the AD converter and the digital computing unit and control electronics (18) for the signal transmitter (2; 20, 21, 19).

5. Device according to claim 1, in which the digital computing unit (6) is accommodated in a buoyant casing (1) as the housing and the signal transmitter is arranged in the upper region of the housing.

6. Device according to claim 1, in which the casing (1) has a tactile reference to the required cooking state of the lump of cooking material and the computing unit (6) is adapted to the signalling of reaching this cooking state.

7. Device according to claim 1, in which the housing has an optical reference to the cooking material; in particular an egg shape for eggs as the cooking material or a potato shape for potatoes or a tortellini for dumplings.

8. Device according to claim 1, in which when the outer temperature value ($\partial_a$(t)) reaches a fixed third temperature threshold, just below the boiling point of the cooking medium, a signal can be emitted which signals the point in time of possible switching off of the energy supply differently than the first cooking state is signalled.

9. Device according to claim 1 or 8, in which before reaching the first cooking state and when the inner temperature value ($\partial_i$(t)) reaches a fourth switching threshold, a signal is given which signals the point in time of the possible reduction of the energy supply differently than the first cooking state is signalled.

10. Device according to claim 1, in which when the inner temperature value reaches the first temperature threshold ($\partial_{S1}$), a timer (17a, 18) is started which triggers further signalling in order to signal a further, higher cooking state differently than the first cooking state of the cooking material.

11. Device according to claim 1, wherein the cooking material is egg, potato, pepper, rice or dumpling.

**12.** Device according to claim 1, in which the delay is effected with two time constants (T1, T2), of which one is smaller than the other in order to take into account a more rapid swelling process of the cooking material and a slower cooking process jointly in the formation of the delayed temperature value ($\partial_i$(t)).

**13.** Device according to claim 2, in which the reduction of the delay is effected by pulsed reduction of the at least one time constant (T1, T2) to a considerably smaller time constant in order to then reset the previously provided at least one time constant.

**14.** Device according to claim 2 or claim 13, in which the reduction of the thermal time constant is a pulsed reduction ($\Delta\partial_i$) of the inner temperature value ($\partial_i$(t)), which reduction is effected when the temperature value ($\partial_a$(t)) measured by the sensor (6a) drops below a preset second temperature threshold ($\partial_{S2}$).

**15.** Device according to claim 14, in which the second temperature threshold lies considerably above the outer temperature normally found outside of the cooking medium and below the first temperature threshold.

**16.** Device according to claim 1 or claim 12, in which a dead time (T3) also jointly determines the delay.

**17.** Device according to claim 1, in which a resetting device (R, 16) is provided which has pulsed strongly reducing influence on the thermally delayed inner temperature value ($\partial_i$(t)) when

(a) the measured temperature value ($\partial_a$(t)) of the sensor (6a) drops,
(b) the dropping temperature value does not reach a preset second threshold value which lies below the first temperature threshold,

wherein the resetting device (16) after the pulsed influence, is reactivated for a further pulsed influence only when the first threshold value or the second threshold value ($\partial_{S1}$, $\partial_{S2}$) is exceeded by the measured temperature value ($\partial_a$(t)).

**18.** Method for signalling at least one first cooking state of at least one lump of cooking material in a liquid cooking medium (7), using a device according to claim 1, wherein

(a) a device (17) on reaching a fixed first temperature threshold ($\partial_{S1}$) switches on the signal transmitter (2, 20, 21, 19), with which a first cooking state of the cooking material is signalled;
(b) a resetting device (R, 16) has pulsed strongly reducing influence on a thermally delayed inner temperature value when

i) a temperature value ($\partial_a$(t)) measured by the sensor (6a) drops,
ii) the dropping temperature value does not reach a present second threshold value which lies below the first temperature threshold.

**19.** Method according to claim 18, wherein the resetting device (R, 16) after the pulsed influence, is reactivated for a further pulsed influence only when the first threshold value or the second threshold value ($\partial_{S1}$, $\partial_{S2}$) is exceeded by the measured temperature value ($\partial_a$(t)).

**Revendications**

**1.** Dispositif de signalisation d'au moins un premier état de cuisson d'au moins une substance à cuire en morceaux dans un milieu de cuisson liquide (7), comme l'eau, avec une enveloppe (1) au moins partiellement flottante, un capteur de température (6a), un convertisseur analogique-numérique (6b), une unité de calcul numérique (6) et un émetteur de signal (2, 20, 21, 19), dispositif dans lequel

(a) il est prévu un dispositif (17, 18) destiné à mettre en marche l'émetteur de signal (2, 20, 21, 19) lorsqu'un premier seuil de température fixé ($\partial_{S1}$) est atteint, ce qui signale le premier état de cuisson de la substance à cuire;
**caractérisé en ce que**
(b) un module électronique contenant le capteur (6a) est entouré de façon étanche à l'eau et est installé dans l'enveloppe (1) avec l'émetteur de signal (2) de telle manière que le milieu de cuisson accède directement au module, afin de détecter la température ($\partial_a$(t)) de l'enveloppe sans retard thermique important à l'aide du capteur (6a);
c) dans l'unité de calcul numérique (6), la valeur de température ($\partial_a$(t)) du milieu de cuisson liquide (7) - qui peut être mesurée par le capteur (6a) pourvu d'une bonne conductibilité thermique par rapport au milieu de cuisson (7) et qui peut être numérisée par le convertisseur (6b) - peut être retardée (15, 15a, 15b) d'au moins une constante de temps thermique (T1, T2, T3), pour former une valeur de température intérieure thermiquement retardée ($\partial_i$(t)).

**2.** Dispositif selon la revendication 1, dans lequel la constante de temps thermique (T1, T2, T3) est réduite essentiellement par sauts lors du refroidissement par rapport à la constante de temps thermique réglée, de telle manière que le comportement de refroidissement ne soit pas symétrique par rapport au comportement de chauffage du dispositif.

**3.** Dispositif selon la revendication 1, dans lequel l'opération de cuisson de la substance à cuire est simulée par une équation différentielle dans l'unité de calcul numérique (6), dans lequel la grandeur d'entrée de l'équation différentielle est la valeur de température ($\partial_a(t)$ du milieu de cuisson (7) mesurée essentiellement sans inertie et la grandeur de sortie est la valeur de température intérieure ($\partial_i(t)$) retardée avec ladite au moins une constante de temps thermique (T1, T2, T3).

**4.** Dispositif selon la revendication 1, dans lequel le capteur (6a) est intégré sous forme de capteur de température à bande interdite dans un circuit de commutation intégré, qui contient le convertisseur analogique-numérique et l'unité de calcul numérique et une électronique de commande (18) pour l'émetteur de signal (2; 20, 21, 19).

**5.** Dispositif selon la revendication 1, dans lequel l'unité de calcul numérique (6) est installée dans une enveloppe flottante (1) comme boîtier et l'émetteur de signal est disposé dans la région supérieure du boîtier.

**6.** Dispositif selon la revendication 1, dans lequel l'enveloppe (1) a une relation tactile avec l'état de cuisson souhaité de la substance à cuire en morceaux et l'unité de calcul (6) est adaptée à la signalisation de la réalisation de cet état de cuisson.

**7.** Dispositif selon la revendication 1, dans lequel le boîtier a une relation optique avec la substance à cuire, en particulier un moule à oeufs pour des oeufs comme substance à cuire ou un moule à pommes de terre pour des pommes de terre ou un tortellini pour des nouilles.

**8.** Dispositif selon la revendication 1, dans lequel, lorsqu'un troisième seuil de température fixé est atteint par la valeur de température extérieure ($\partial_a(t)$), un signal peut être émis peu en dessous de la température d'ébullition du milieu de cuisson, signal qui signale l'instant de la possible coupure de l'apport d'énergie d'une autre manière que la signalisation du premier état de cuisson.

**9.** Dispositif selon la revendication 1 ou 8, dans lequel, avant d'atteindre le premier état de cuisson et lorsqu'un quatrième seuil de commutation est atteint par la valeur de température intérieure ($\partial_i(t)$), un signal est émis, qui signale l'instant de la possible baisse de l'apport d'énergie d'une autre manière que la signalisation du premier état de cuisson.

**10.** Dispositif selon la revendication 1, dans lequel, lorsque le premier seuil de température ($\partial S1$) est atteint par la valeur de température intérieure, une minuterie (17a, 18) démarre, qui provoque d'autres signalisations, pour signaler un autre état de cuisson plus élevé d'une autre manière que la signalisation du premier état de cuisson de la substance à cuire.

**11.** Dispositif selon la revendication 1, dans lequel la substance à cuire est des oeufs, des pommes de terre, du paprika, du riz ou des nouilles.

**12.** Dispositif selon la revendication 1, dans lequel le retard est opéré avec deux constantes de temps (T1, T2), dont l'une est inférieure à l'autre, afin de tenir compte d'un processus de gonflement plus rapide de la substance à cuire et d'un processus de cuisson plus lent en même temps lors de la formation de la valeur de température retardée ($\partial_i(t)$).

**13.** Dispositif selon la revendication 2, dans lequel la diminution du retard est effectuée par une baisse pulsée de ladite au moins une constante de temps (T1, T2) à une constante de temps essentiellement plus basse, pour régler ensuite de nouveau ladite au moins une constante de temps prévue antérieurement.

**14.** Dispositif selon la revendication 2 ou la revendication 13, dans lequel la diminution de la constante de temps thermique est une baisse pulsée ($\Delta\partial_i$) de la valeur de température intérieure ($\partial_i(t)$), baisse qui est effectuée lorsque la valeur de température ($\partial_a(t)$) mesurée par le capteur (6a) descend en dessous d'un deuxième seuil de température prédéterminé ($\partial_{S2}$).

**15.** Dispositif selon la revendication 14, dans lequel le deuxième seuil de température est situé nettement au-dessus de la température extérieure atteinte normalement à l'extérieur du milieu de cuisson et en dessous du premier seuil de température.

**16.** Dispositif selon la revendication 1 ou la revendication 12, dans lequel un temps mort (T3) détermine aussi le retard.

**17.** Dispositif selon la revendication 1, dans lequel il est prévu un dispositif de réinitialisation (R, 16), qui influence fortement à la baisse de manière pulsée la valeur de température intérieure thermiquement retardée ($\partial_i(t)$), lorsque

(a) la valeur de température mesurée ($\partial a(t)$) du capteur (6a) baisse,
(b) la valeur de température décroissante descend en dessous d'une deuxième valeur de seuil prédéterminée, qui est située en dessous du premier seuil de température,

dans lequel le dispositif de réinitialisation (16) n'est de nouveau activé, après l'influence pulsée, pour une nouvelle influence pulsée que lorsque la première valeur de seuil ou la deuxième valeur de seuil $(\partial_{S1}, \partial_{S2})$ est dépassée par la valeur de température mesurée $(\partial_a(t))$.

18. Procédé de signalisation d'au moins un premier état de cuisson d'au moins une substance à cuire en morceaux dans un milieu de cuisson liquide (7), avec un dispositif selon la revendication 1, dans lequel

(a) un dispositif (17) met en marche l'émetteur de signal (2, 20, 21, 19) lorsqu'un premier seuil de température fixé $(\partial_{S1})$ est atteint, ce qui signale un premier état de cuisson de la substance à cuire;

(b) un dispositif de réinitialisation (R, 16) influence fortement à la baisse, de manière pulsée, une valeur de température intérieure thermiquement retardée, lorsque

i) une valeur de température $(\partial_a(t))$ mesurée par le capteur (6a) baisse,

ii) la valeur de température décroissante descend en dessous d'une deuxième valeur de seuil prédéterminée, qui est située en dessous du premier seuil de température.

19. Procédé selon la revendication 18, dans lequel le dispositif de réinitialisation (R, 16) n'est de nouveau activé, après l'influence pulsée, pour une nouvelle influence pulsée que lorsque la première valeur de seuil ou la deuxième valeur de seuil $(\partial_{S1}, \partial_{S2})$ est dépassée par la valeur de température mesurée $(\partial_a(t))$.

Fig. 1

Fig. 2

Fig. 3

Fig. 4

Fig. 5

**IN DER BESCHREIBUNG AUFGEFÜHRTE DOKUMENTE**

**In der Beschreibung aufgeführte Patentdokumente**

- EP 145953 A2
- US 4085493 A
- EP 441432 A